(19)

**Europäisches Patentamt**
**European Patent Office**
**Office européen des brevets**

(11) **EP 4 462 626 A1**

(12) **EUROPEAN PATENT APPLICATION**

(43) Date of publication:
**13.11.2024 Bulletin 2024/46**

(21) Application number: **23315189.3**

(22) Date of filing: **11.05.2023**

(51) International Patent Classification (IPC):
**H02J 3/14** (2006.01)    **G05F 1/12** (2006.01)

(52) Cooperative Patent Classification (CPC):
**H02J 3/14; G05F 1/12;** H02J 2310/60

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Schneider Toshiba Inverter Europe SAS**
**27120 Pacy-sur-Eure (FR)**

(72) Inventors:
• **Credoz, Alexandre**
  **27200 VERNON (FR)**
• **Jebai, Al Kassem**
  **27200 VERNON (FR)**
• **Combes, Pascal**
  **27200 VERNON (FR)**

(74) Representative: **Plasseraud IP**
**104 Rue de Richelieu**
**CS92104**
**75080 Paris Cedex 02 (FR)**

(54) **STABILIZATION PROCESS FOR AN ELECTRIC GRID**

(57) The present disclosure concerns a control process for a control system (60, 70, 100, 120) of a load system (30, 31, 32, 90) connected to an electric grid through said control system wherein said control process (40, 50, 41, 51, 42, 52, 43, 53) is configured to provide one or more adapted drive commands $(X_{lim}, Y_{lim})$ to such control system dependent on the grid frequency $(\omega)$. The control system may comprise an inverter, a converter, a thyristor bridge or contactors ad the load may be a motor. The disclosure also concerns a control device for implementing the Control process.

$$X_{lim} = P_{lim} \text{ or } I_{lim} \text{ or } T_{lim} \text{ or } S_{lim}$$

**FIG. 1**

**Description**

**Field of the invention**

The present disclosure concerns the field of electric grid management and prevention of instabilities in such grids.

**Background**

Electric grids are operated by Transmission System Operators (TSO). The aim of these operators is to maintain a balance between production and consumption especially during incidents such as power generator outage, natural disasters or other disasters.

The response to an incident can be separated into 3 types of regulation and time scales, which are detailed hereunder:

1 - Primary regulation:
Primary regulation uses the kinetic energy stored in the generators and the motors connected to the grid: Decreasing the frequency of the grid allows to extract kinetic energy from the rotors of the generators and the motors connected to the grid. This normally occurs within a few seconds.

2 - Secondary regulation:
Secondary regulation uses the security margins in the dimensioning of the generators (normally generators are not operated at their maximum capacity but rather at a slightly lower value, which allows to increase the power that a generator can yield to balance the energy production with the energy consumption after an incident) and sometimes, shedding of some customers which are disconnected from the grid so that the consumption matches the production. This normally occurs within a few tens of seconds, after the incident.

3 - Tertiary regulation:
During the tertiary regulation phase, new production means are started so that the customers can restart their normal operation and the generators can return to their normal operating point. This normally occurs within a few minutes after the incident.

in normal operations of traditional motors, replacing contactors to turn on or off such motors by variable speed drive control processes in drive control systems with electronic switches has great advantages in terms of energy efficiency since the motors and the applications can be run at their optimal efficiency point. However, such replacement is detrimental in terms of electrical grid stability. Indeed, in steady state, the control system operate at constant power independently of the electric grid frequency but contrary to most direct-on-line motors (especially those driving pumps and fans) in which the power consumed reduces when the electric grid frequency decreases thus adapting to the new state of the grid, motors controlled by control systems will keep consuming the same power when the frequency decreases which decreases the grid stability.

**Summary of the invention**

In view of the prior art and in order to provide an improved regulation for electric grids, the present disclosure provides a control process for a control system of a load system connected to an electric grid through said control system in which said control process is configured to provide one or more adapted drive commands to such control system dependent on the grid frequency. The present disclosure avoids at least in some extent load shedding by disconnecting totally loads.

Said control system comprising an inverter and said load system being an electric motor, said adapted drive commands may comprise a power limitation command acting on a drive control process of said inverter for said motor when said grid frequency decreases with respect to a nominal grid frequency, said power limitation command interfering with the drive control process to reduce the power consumed by said motor.

Said adapted drive commands may comprise a torque limitation command acting on a drive control process of said inverter for said motor in said inverter when said grid frequency decreases with respect to a nominal grid frequency, said power limitation command interfering with the drive control process to reduce the power consumed by said motor.

Said adapted drive commands may comprise a drive current limitation command acting on a drive control process of said inverter for said motor when said grid frequency decreases with respect to a nominal grid frequency, said torque or current limitation command interfering with the drive control process to reduce the power consumed by said motor.

said control system comprising contactors controlled by a control logic said adapted drive commands may comprise a stop command acting on said control logic of said contactors for opening said contactors when said grid frequency decreases with respect to a nominal grid frequency.

Said adapted drive commands may comprise a speed limitation command acting on a drive control process of said inverter for said motor when said grid frequency decreases with respect to a nominal grid frequency, said speed limitation command interfering with the drive control process to reduce the power consumed by said motor.

Said control system comprising a DC/DC converter having a battery charging process and said load system being one or more batteries, said adapted drive commands may comprise a current limitation command acting on said battery charging process of said converter when said grid frequency decreases with respect to a nominal grid frequency, said current limitation command interfering with the battery charging process to reduce the power consumed by DC/DC converter.

Said control system comprising a thyristor bridge controlled by a soft starter control system and said load system being a motor, said adapted drive commands may comprise a stop command acting on said soft starter control process of said bridge when said grid frequency decreases with respect to a nominal grid frequency, said stop command interfering with the soft starter control process to reduce the power consumed by said motor.

In such situation, the control system stops operation of the load locally without the need of a command from the TSO.

Said adapted drive commands may include a limitation command when said grid frequency goes under a first low frequency limit.

Here also, the control system acts without the need of a command from the TSO.

Said adapted drive commands may include a return to normal command when said grid frequency goes above a predetermined level above said first low frequency limit to provide a hysteresis effect.

Said adapted drive commands may be a function of the grid frequency activated between said first low frequency limit and a second low frequency limit lower than said first low frequency limit.

Said function may be a linear or stepwise function.

Said adapted drive commands may include a turn-off command when said grid frequency goes under said second low frequency limit.

The control process may comprise at least one low frequency alarm sequence.

The present disclosure concerns also a control device, for implementing the control process, comprising a processor with RAM, ROM, inputs to get grid data, outputs to provide said adapted drive commands and to provide alarms and a main program implemented in said processor comprising a first process providing grid frequency estimation, a first test for comparing an estimated present frequency with at least a first low frequency limit input in said program and a second process for issuing said adapted drive commands and alarms upon occurrence of said present grid frequency going under said low frequency limit. The program implemented by the processor may also comprise a process for issuing end of the adapted drive commands upon occurrence of said present frequency going above said first low frequency limit or upon occurrence of said present frequency going above a predetermined level above said low frequency limit in a second test.

Said program may comprise more than one adapted drive command corresponding to more than one low frequency limits.

The present disclosure concerns also a drive system for a load comprising a rectifier, a power supply having semiconductor switches for powering the load and comprising a control device of the disclosure wherein said program is embedded in a drive program controlling gates of said semiconductor switches powering the load.

## Brief description of the drawings

Figure 1 concerns a first example of a control system according to aspects of the present disclosure;

Figure 2 concerns a second example of a control system according to aspects of the present disclosure;

Figure 3 concerns a third example of a control system according to aspects of the present disclosure;

Figure 4 concerns a fourth example of a control system according to aspects of the present disclosure;

Figure 5 shows a possible curve for a low frequency detection;

Figure 6 shows curves of different devices under frequency drop;

Figure 7 shows a simplified schematics of an example of control device in accordance with the present disclosure;

Figure 8 shows a simplified flowchart of an example of program in accordance with the present disclosure.

**Detailed description of embodiments of the invention**

The present disclosure takes its interest in alternate current electric grids which need regulation at levels other than the power source and which have power sources limited with regard to the load of the grid.

The regulation that is impacted by the replacement of direct-on-line motors by drives is the primary regulation which relies on the kinetic energy stored on the motors and the damping provided by the dependency of the load to the speed. That is why we will focus only on the modelling of the primary regulation.

TSOs provide complete dynamic models of the electric grid they manage. For instance, the model of the European electric grid can be accessed at ENTSO-E Dynamic model of Continental Europe. However, one needs to obtain a license to use these models. Simplified models have been proposed in the literature.

Dynamic models of the electric grid:

The model described in document Zhang X., Papchristodoulou A. "Redesigning Generation Control in Power Systems: Methodology, Stability and Delay Robustness", Conference on Decision and Control, 2014 is based on the fact that most of the energy stored in the grid is kinetic energy stored in generators and large motors. The electric grid is represented as a graph whose nodes are the generators and the motors and edges are the transmission lines. The dynamics reads:

$$J_i \frac{d\omega_i}{dt} = (G_i - L_i)/\omega_i - \sum_{i,j} T_{ij}\delta_{ij}$$

$$\frac{d\delta_{ij}}{dt} = \omega_i - \omega_j$$

Where:

- $\omega_i$ are the frequencies of the grid at nodes of the grid;
- $\delta_{ij}$ are the phase shifts over each transmission line;
- $G_i$ and $L_i$ are respectively the power generated and consumed at a node i;
- $T_{ij}$ is the coupling coefficient for the transmission line between nodes $i$ and $j$;
- $J_i$ is the inertia at node i such inertia is often expressed in terms of stored kinetic energy.

To stabilize the grid, the energy producers have to add some regulation of the generated power:

$$G_i = G_{0i} - d_{gi}\omega_i^2$$

Moreover, when the loads are direct-on-line motors operating pumps, fans, etc..., the consumed power depends on the speed of such load as:

$$L_i = L_{0i} + f_{1i}\omega_i^2 + f_{2i}|\omega_i^3|$$

Hence, the model of the grid can be simplified into:

$$J_i \frac{d\omega_i}{dt} = \frac{G_{0i} - L_{0i}}{\omega_i} - (f_{1i} + d_{gi})\omega_i - f_{2i}|\omega_i|\omega_i - \sum_{i,j} T_{ij}\delta_{ij}$$

$$\frac{d\delta_{ij}}{dt} = \omega_i - \omega_j$$

Simplified dynamic model of the electric grid:

Assuming that the transmission lines are infinitely rigid ($T_{ij} \rightarrow \infty$), we find that the phase shift over transmission lines tend to 0 and consequently, the electric grid has a single frequency, and the model can be simplified into:

$$J\frac{d\omega}{dt} = \frac{G_0 - L_0}{\omega} - (f_1 + d)\omega - f_2|\omega|\omega$$

where $J = \Sigma_i J_i$, $d = \Sigma_i d_{gi}$, $f_1 = \Sigma_i f_{1i}$ and $f_2 = \Sigma_i f_{2i}$.

In normal situations there is an equilibrium between the generated power and the consumed power:

$$G_0 - d\omega^2 = L_0 + f_1\omega^2 + f_2|\omega|^3$$

and the frequency of the grid is stable.

When there is an incident at a generator, the generated power is less than the consumed power and the frequency decreases. The difference is compensated by the loss of kinetic energy. Thanks to the damping due to the dependency of the load to the speed, the system reaches a new equilibrium at a lower frequency until new power generation means are connected to the grid.

Impact of the controlled devices:

While a direct-on-line motor adds damping to the grid, a device driven by a control process in a drive control system hereafter called "controlled device" is usually a constant power device, i.e. for a node $i$ with a drive $L_i = L_{0i}$ and there is no inertia, since most controlled devices are not able to send back power to the grid. Our invention aims to address the first of these issues by ensuring that such controlled devices also called drives add damping to the grid.

In consequence, in the present disclosure, when the frequency of the grid decreases below a certain threshold, the control process will limit the power consumed by the device.

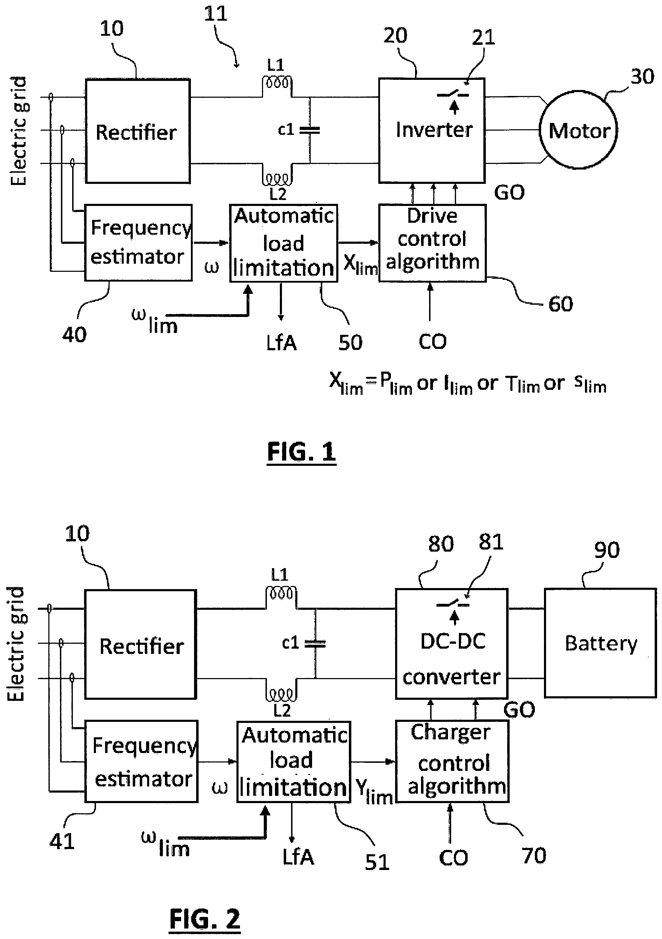

According to figure 1 a first implementation concerns a motor 30 driven through an inverter 20 after a rectifier 10 and which operation is under control of a drive control process 60 receiving user commands CO. In such case, the user commands may be a speed command for the motor or a torque command in example and the drive control process drives the inverter 20 in order to achieve the requested user command CO, such inverter consuming the necessary power from the electric grid through the rectifier 10 and DC link 11 which may have induction coils L1, L2 and capacitor c1.

The control device of the present disclosure comprises a frequency estimator 40 which estimates the electric grid frequency w and provides such estimate to an automatic load limitation function 50 receiving at least one low frequency limit $\omega_{lim}$ under which the load limitation function will provide a limitation parameter $X_{lim}$ of the drive control process.

For a motor, $X_{lim}$ may represent a power limitation $P_{lim}$ and since the power is directly proportional to the torque and the current, the limitation parameter $X_{lim}$ may also be a limit to the torque of the motor or a limit to the current consumed by the motor. Such limitation is introduced in the drive control process 60 of the controller which controls the on/off sequence of semiconductor switches through gates orders GO sent to the inverter 20 driving the motor.

By doing this, the automatic load limitation function 50 comes as a limitation of the customer orders CO. In addition, the automatic load limitation function is designed to provide one or more alarm signal LfA, for low frequency alarm, in order to inform the customer that the load is in a limited mode.

in case the motor is driving a fan or a pump, the device may also provide a speed limit $s_{lim}$ since in pumps and fans the power consumption depends on the speed at which they operate.

With such a limitation, a power extracted by the load from the grid is limited, and the system reproduces the behaviour of a motor connected directly to the grid where the motor participates to the grid stabilization.

With the present principle, several low frequency limit $\omega_{lim1}$, $\omega_{lim2}$,... may be used corresponding to several levels of limitation of the power consumed by the motor 30 and even a stop of the motor 30 when the frequency goes under a specific lower limit $\omega_{min}$ may be considered.

According to the example of figure 2, the control system of the present disclosure is implemented in a battery charging system such as a battery charging station. Such battery charging system comprises the rectifier 10, a DC-DC converter 80 charging a battery 90. The DC-DC converter comprises a charger control process 70 receiving user commands CO such as a charging current commands according to a user choice between several charging time possibilities. The control system here still comprises a frequency estimator 41 that measures the grid frequency using grid voltage measurements and which provides the grid frequency $\omega$ to an automatic load limitation function 51 receiving or having a lower limit frequency $\omega_{lim}$. When the grid frequency goes under the lower limit frequency $\omega_{lim}$, the automatic load limitation function sends a limitation parameter $Y_{lim}$ to the charger control process 70 in order to limit a charge parameter in the DC-DC converter. Here the limitation parameter $Y_{lim}$ may be a limit to the charge current $I_{lim}$ or the charge power $P_{lim}$. The automatic load limitation function may be embedded in the charging station program, i.e. in case of a charging station with several outlets which may be used in parallel and where overloading the electric grid is to be avoided.

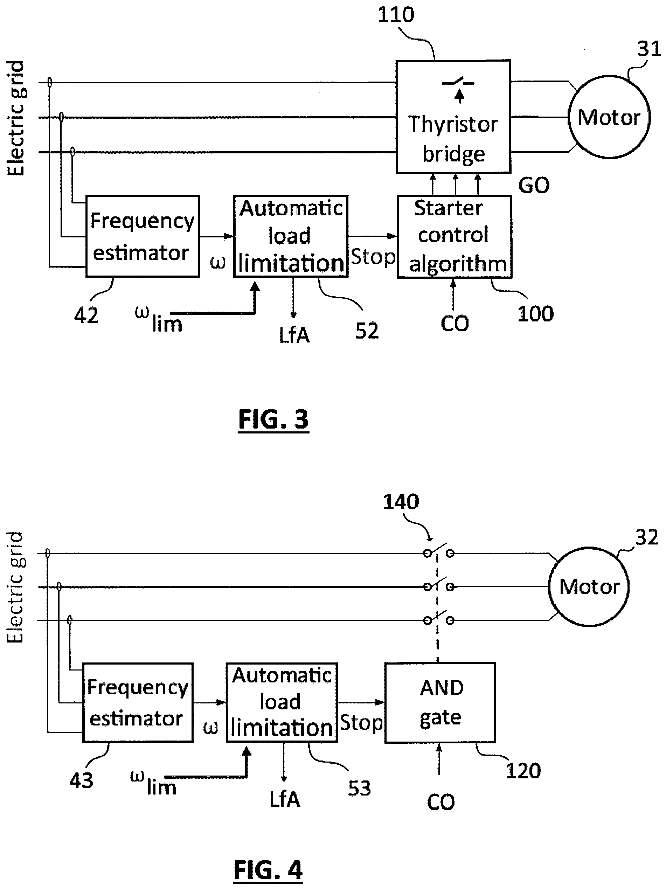

In figure 3 the principle is used to pilot a starter control process for a motor 31 driven by a thyristor bridge 110 and a soft starter control process 100. Soft-staters may measure the grid voltage and the instants when the current changes sign, which allows them to estimate the grid frequency.

The soft starter control process 100 computes the gate orders GO depending on the customer orders CO and the automatic load limitation function output based on the frequency estimation done by the frequency estimator 42.

Soft starters are not able to change the frequency of the voltages imposed at the motor terminals. Nevertheless, a basic version of the invention can be implemented in the soft starter system or in addition to the soft starter system as described below:

The frequency estimator 42 measures the grid frequency using current sign measurements, when the frequency goes under $\omega_{lim}$, the automatic load limitation function 52, sends a stop command to the starter control process 100 to stop starting of the motor 31.

Here the control is limited since only the start sequence of the motor 31 is controlled and the automatic load limitation function 52 provides only a stop command to the starter control process to prevent starting the motor when the electric grid frequency is lower than the limit $\omega_{lim}$. The automatic load limitation function 52 can also send an alarm Lfa, which can be used by another device to take action or just inform the customer of a risk of outage.

The system in figure 4 is a simpler embodiment where an automatic load limitation function 53 by-passes customer commands CO to open piloted switches 140 of a motor 32 or other equipment when the grid frequency $\omega$ goes under a low limit $\omega_{lim}$. The by-pass may be done within a logic gate circuit 120 such as a AND gate which allows to close the switches 140 when both a customer CO and a grid frequency $\omega$ above the limit $\omega_{lim}$ are present.

The automatic load limiting or shedding module or function may also send an alarm LfA, which can be used by another device to take action or just inform the customer of a risk of outage. This provides an automatic shut off system without the need of a command from the TSO contrary to devices such as water heaters which may be turned off remotely.

Activating the control process on several devices on the electric grid will help to stabilize the electric grid without actions from the TSOs. Customers could be encouraged to install the automatic load limitation function on their systems by a reduction of their electricity or subscription price or regulatory obligations.

The control modules in which the frequency estimation and automatic load limitation functions are implemented may be an additional device plugged onto the grid and the controlled devices having a specific input terminal for such a module but may also be a specific software part embedded in the controller device such as a control module of the inverter 20, a control module of the DC-DC converter 80, a control module of the thyristor bridge 110 or a control module of the piloted switches or connected contactors 140 when the frequency estimation function is already present or may be built in the controller device software and/or hardware.

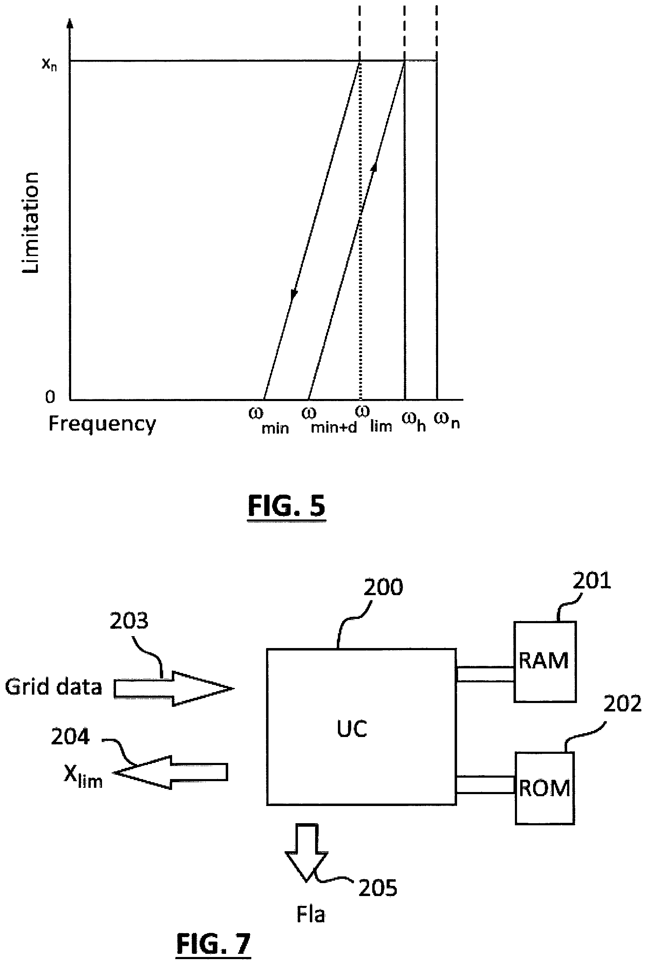

Figure 5 provides a possible implementation where a power limitation effect starts at a frequency $\omega_{lim}$ which corresponds to a first low frequency limit, and is increased with a linear curve until a frequency $\omega_{min}$ which corresponds to a second low frequency limit is reached at which the controlled load is turned off. In such example a hysteresis curve is created with an intermediate limit ($\omega_{min+d}$ higher than $\omega_{min}$ and an upper level or limit $\omega_h$ higher than $\omega_{lim}$ to avoid a chattering effect.

A simulation is done with a 20MW load connected to a modified version of IEEE test power grid based on WSCC (Western System Coordinated Council) network. The network model is implemented using MATLAB/Simulink SimPowerSystems toolbox to simulate the WSCC network which has been done for Delavari A., Kamwa I., Brunelle P., "Simscape Power Systems Benchmarks for Education and Research in Power Grid Dynamics and Control", 2018, IEEE Canadian Conference on Electrical & Computer Engineering. The parameters have been modified, so that the principle and the advantage of the invention can be illustrated without having a too slow simulation. The network model comprises three generators G1, G2, G3. At the output of each generator, there is a transformer to rise the voltage up the transport network voltage (230kV in this case). The transport network lines are modeled as $\pi$-section lines. On top of the 20MW load on which an embodiment of the invention is implemented, there are two constant power loads. The loads in the WSCC networks have been adjusted so that the loss of G3 would require the reduction of the load power for the power balance to be reached (even with the energy reserves in the generators G1 and G2).

To simplify the simulation, we made the following hypotheses:

a. Only the static model of the pump is modelled as $T = k\omega_m^2$ (i.e $P = k\omega_m^3$) with $k = P_n/\omega_{mn}$ so that nominal power is reached at nominal frequency;

b. The current harmonics at the drive input are neglected;

The failed generator remains connected to the grid; no mechanical power is provided to the grid by the failed generator, but it may consume some power due to the current in the rotor and the stator and its inertia participate in the network stability.

Different types of loads have been simulated:

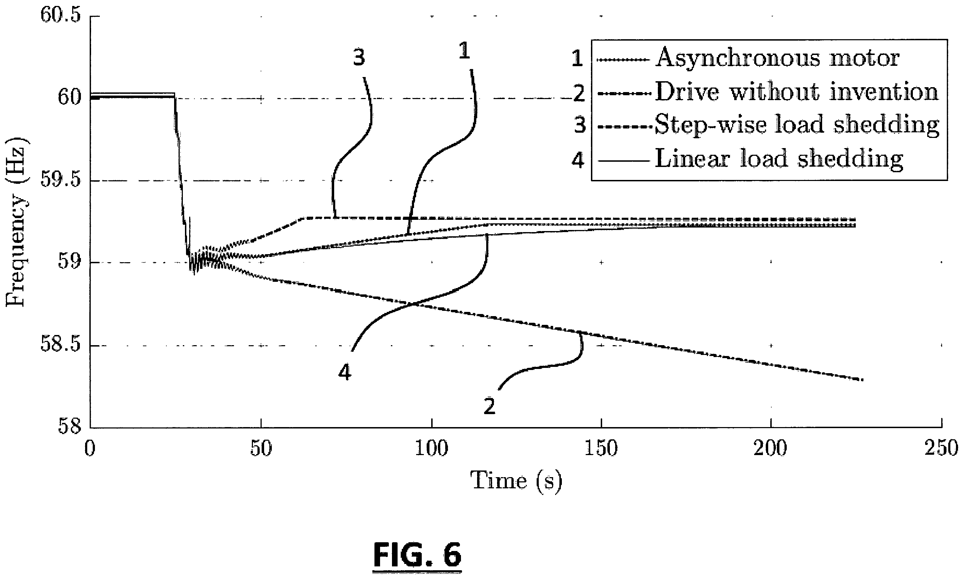

An asynchronous motor driving a pump reference 1 in figure 6;
A prior art load with drive control reference 2 in the chart of figure 6. The drive control runs the pump at a constant speed, hence its active power is the nominal power (Joule losses are neglected in this case), consequently it can be modelled as a 20MW constant power load with $P = 20MW$ (and $Q = 0$).

Two strategies of drive control according to the present disclosure where the power consumed by the drive is limited depending on the frequency modelled as a variable power load with $Q = 0$ with:

A step-wise load shedding with hysteresis as reference 3 on figure 6;
A proportional power limitation as reference 4 on figure 6.

The scenario is as follows: At $t = 25s$, there is a failure on the generator G3 (of 128$MW$) and it does not yield power to the grid. Only the primary and the secondary regulations are simulated; no new generator is connected to the grid to compensate for the loss of G3.

The evolution of the frequency in the various cases is shown in figure 6. When the asynchronous motor is directly connected to the grid, we can see that the network reaches a new equilibrium at a reduced frequency: Indeed, the mechanic power required by the pump is reduced when the frequency of the grid reduces. However, if we add a drive to control the motor, the mechanic power required by the pump is decorrelated from the grid frequency and it requires a constant electric active power, which cannot be extracted from the grid (even when both G1 and G2 are at maximum power). As a consequence, the grid frequency is going down, as kinetic energy is extracted from the rotors of the generators and, at some point a new generator or the disconnection of some load may be required to avoid a blackout. In the example provided, this can be avoided by using the invention on the 20MW load: when the invention is activated (either as a step-wise power limitation or a proportional power limitation), we can see that the grid reaches a new equilibrium as in the direct-on-line asynchronous motor case.

To summarize, the automatic load limitation provides a control process for a load driven by a control system which may comprise a first low frequency limit and a second low frequency limit above said first low frequency limit where adapted drive commands are issued to introduce a power limiting parameter in the control system when a present frequency of the electric grid decreases under said first low frequency limit and where non-limiting drive commands or end of the adapted drive commands is issued upon a present frequency of the electric grid increasing above said second low frequency limit. The adapted drive commands may be calculated as a function of the grid frequency, e.g. stepwise, linear or other; in a frequency range under a frequency considered as a minimum acceptable frequency called first low frequency limit $\omega_{lim}$. In addition, as seen above in case the frequency goes under a third low frequency limit $\omega_{min}$ under the first low frequency limit the adapted drive commands may comprise a stop command providing complete load shedding on the grid.

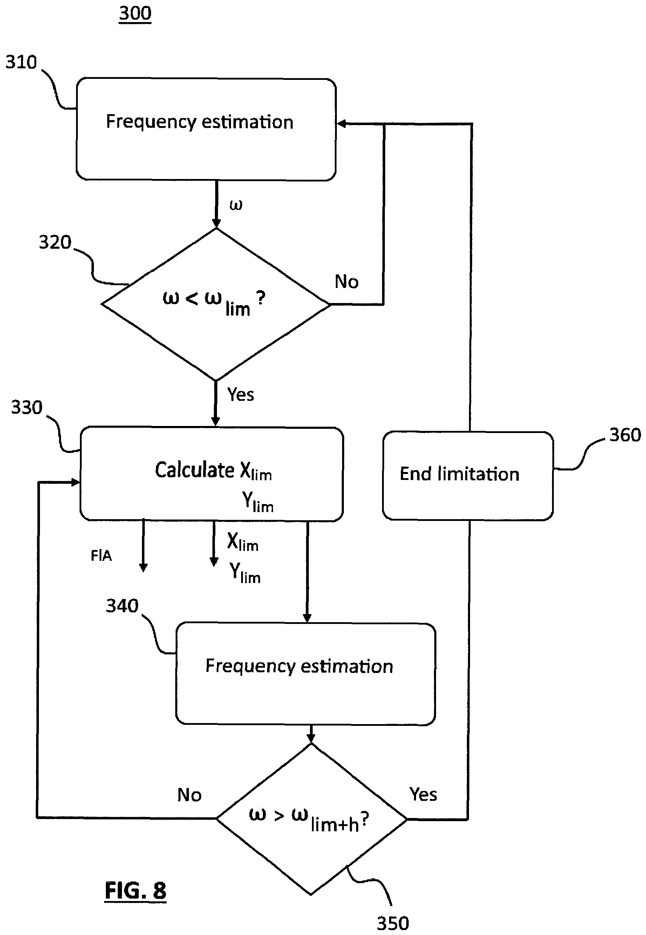

As in figure 7, the control process may be implemented in a processor 200 with RAM 201, ROM 202, inputs 203 to get grid data, outputs 204 to provide said adapted drive commands $X_{lim}$, $Y_{lim}$ . Such processor may be a processor of the power supply system of the load or an additional processor. The program embedded in such processor provides alarms FIA and the adapted drive commands $X_{lim}$, $Y_{lim}$ . It may be including a main program 300 depicted in figure 8 and implemented in said processor. Such main program may comprise a first process 310 providing frequency estimation, a first test 320 for comparing an estimated present frequency with at least a first low frequency limit input in said program. The frequency limit may be adapted to the type of grid, e.g. a different frequency limit may be used for an island grid or a mainland grid and more than one frequency limits may be included in the program and the memory of the processor as discussed above. The program comprises a second process 330, 340 for issuing said adapted drive commands $X_{lim}$, $Y_{lim}$ and alarms FIA upon occurrence of said present frequency going under said value $\omega_{lim}$ at the grid level and for issuing non-limiting drive commands or end of the adapted drive commands 360 upon occurrence of said present frequency going above said value $\omega_{lim}$ for a simple regulation or upon occurrence of said present frequency going above a second low frequency limit $\omega_{lim+h}$ above said low frequency limit in case of a regulation with hysteresis in the second test 350. The second process may comprise calculations which provide a limitation command function of the grid frequency between predetermined frequency limits or more than one adapted drive command corresponding to more than one low frequency limits.

When the drive system for the load comprises an inverter in case of an ac load or a chopper in case of a DC load, a power supply having semiconductor switches for powering the load and a control device having a drive program controlling gates of said semiconductor switches for powering the load, the processes of the present disclosure may be incorporated in said drive program.

The invention defined in the appended claims is not limited by the above description of exemplary embodiments and in particular the load system driven by the inverters, converters or bridges under control may be a motor driving fans, pumps or other or other equipment such as a refrigerator or air conditioning compressor.

**Claims**

1. - Control process for a control system (60, 70, 100, 120) of a load system (30, 31, 32, 90) connected to an electric grid through said control system wherein said control process (40, 50, 41, 51, 42, 52, 43, 53) is configured to provide one or more adapted drive commands ($X_{lim}$, $Y_{lim}$) to such control system dependent on the grid frequency (w).

2. - Control process according to claim 1, wherein said control system comprising an inverter (20) and said load system being an electric motor (30), said drive commands ($X_{lim}$) comprise at least one of a power limitation command ($P_{lim}$), a torque limitation command ($T_{lim}$), a current limitation command ($I_{lim}$) or a speed limitation command ($s_{lim}$) acting on a drive control process (60) of said inverter (20) for said motor (30) when said grid frequency ($\omega$) decreases with respect to a nominal grid frequency ($\omega_n$), said power limitation command ($P_{lim}$), torque limitation command ($T_{lim}$) or current limitation command ($I_{lim}$) or speed limitation command ($s_{lim}$) interfering with the drive control process to reduce the power consumed by said motor.

3. - Control process according to claim 1, wherein said control system comprising a DC/DC converter (80) having a battery charger process (70) and said load system being one or more batteries (90), said adapted drive commands ($Y_{lim}$) comprise a current limitation command ($I_{lim}$) acting on said battery charging process of said converter when said grid frequency decreases with respect to a nominal grid frequency, said current limitation command interfering with the battery charging process to reduce the power consumed by DC/DC converter.

4. - Control process according to claim 1, wherein said control system comprising a thyristor bridge (110) controlled by a soft starter control process (100) and said load system being a motor (31), said adapted drive commands comprise a stop command acting on said soft starter control process of said bridge when said grid frequency decreases with respect to a nominal grid frequency, said stop command interfering with the soft starter control process to reduce the power consumed said motor.

5. - Control process according to claim 1, wherein said control system comprising contactors (140) controlled by a control logic (120), said adapted drive commands comprise a stop command acting on said control logic of said contactors for opening said contactors when said grid frequency decreases with respect to a nominal grid frequency.

6. - Control process according to any one of the preceding claims, wherein said adapted drive commands are activated when said grid frequency goes under a first low frequency limit ($\omega_{lim}$).

7. - Control process according to claim 6, comprising a return to normal command when said grid frequency goes above a predetermined level ($\omega_h$) above said first low frequency limit ($\omega_{lim}$) to provide a hysteresis effect.

8. - Control process according to claims 6 or 7 when dependent of any one of claims 1 to 4, wherein said adapted drive commands are a function of the grid frequency activated between said first low frequency limit ($\omega_{lim}$) and a second low frequency limit ($\omega_{min}$) lower than said first low frequency limit.

9. - Control process according to claim 8, wherein said function is a linear or stepwise function.

10. - Control process according to any one of the preceding claims, wherein said adapted drive commands including a turn-off command when said grid frequency goes under a second low frequency limit ($\omega_{min}$).

11. - Control process according to any one of the preceding claims, comprising at least one low frequency alarm (FIA) sequence.

12. - Control device for implementing the Control process according to any one of the preceding claims, comprising a processor (200) with RAM (201), ROM (202), inputs (203) to get grid data, outputs (204) to provide said adapted drive commands ($X_{lim}$, $Y_{lim}$) and to provide alarms (FIA) and a main program (300) implemented in said processor comprising a first process (310) providing frequency estimation, a first test (320) for comparing an estimated present frequency with at least a first low frequency limit input in said program, a second process (330, 340) for issuing said adapted drive commands ($X_{lim}$, $Y_{lim}$) and alarms (FIA) upon occurrence of said present frequency going under said value ($\omega_{lim}$) at the grid level and for issuing end of the adapted drive commands upon occurrence of said present frequency going above said first low frequency limit ($\omega_{lim}$) or upon occurrence of said present frequency going above a predetermined level ($\omega_h$) above said first low frequency limit in a second test (350).

13. - Control device according to claim 12, wherein said program comprises more than one adapted drive command corresponding to more than one low frequency limits.

14. - Drive system for a load comprising a rectifier (10), a power supply (20, 80, 110) having semiconductor switches (21, 81) for powering the load and comprising a control device according to claim 12 or 13, wherein said program is embedded in a drive program comprising said drive control process (60) controlling gates (GO) of said semiconductor switches powering the load.

$X_{lim} = P_{lim}$ or $I_{lim}$ or $T_{lim}$ or $S_{lim}$

**FIG. 1**

**FIG. 2**

## FIG. 3

Electric grid

| 110 | 31 |

Thyristor bridge

Motor

Frequency estimator

Automatic load limitation

Starter control algorithm

$\omega$

Stop

GO

42

$\omega_{lim}$

LfA

52

CO

100

**FIG. 3**

## FIG. 4

Electric grid

| 140 | 32 |

Motor

Frequency estimator

Automatic load limitation

AND gate

$\omega$

Stop

43

$\omega_{lim}$

LfA

53

CO

120

**FIG. 4**

**FIG. 5**

**FIG. 7**

**FIG. 6**

EP 4 462 626 A1

300

310 ──╮

┌─────────────────────────────┐
│                             │
│    Frequency estimation     │◄──────────────┐
│                             │               │
└─────────────────────────────┘               │
                │                              │
                │ ω                            │
                ▼                              │
320 ──╮                                        │
         ◇─────────────────────────◇          │
        /                           \   No     │
       ◇      $\omega < \omega_{lim}$ ?  ◇────┘
        \                           /
         ◇─────────────────────────◇
                │
                │ Yes
                ▼
330 ──╮                                    ┌──────────────────┐
┌─────────────────────────────┐           │                  │── 360
│                             │           │  End limitation  │
│   Calculate $X_{lim}$        │           │                  │
│          $Y_{lim}$           │           └──────────────────┘
│                             │
└─────────────────────────────┘
     │           │        │
   FIA         $X_{lim}$    │
     │         $Y_{lim}$    │
     ▼           ▼        $X_{lim}$
                          $Y_{lim}$
340 ──╮                     │
         ┌──────────────────▼──────────┐
         │                             │
         │    Frequency estimation     │
         │                             │
         └─────────────────────────────┘
                        │
                        ▼
              ◇───────────────────◇
      No     /                     \   Yes
    ─────────◇  $\omega > \omega_{lim+h}$?  ◇─────
             \                     /
              ◇───────────────────◇
                                    ╰── 350

**FIG. 8**

Europäisches
Patentamt

European
Patent Office

Office européen
des brevets

# EUROPEAN SEARCH REPORT

Application Number

EP 23 31 5189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/026443 A1 (COVIC GRANT ANTHONY [NZ] ET AL) 25 January 2018 (2018-01-25) * abstract; figures * * paragraphs [0003], [0004], [0304] – [0307], [0203] – [0210] * | 1,6-11, 13,14 | INV. H02J3/14 G05F1/12 |
| X | CN 110 336 330 A (UNIV SOUTHEAST) 15 October 2019 (2019-10-15) * abstract; figures * * paragraphs [0004] – [0015], [0059] – [0064] * | 1,2 | |
| X | US 2022/340034 A1 (REZKALLA MICHEL MAHER NAGUIB [DK] ET AL) 27 October 2022 (2022-10-27) * abstract; figures 1, 2, 6 * * paragraphs [0059] – [0064] * | 1,3 | |

TECHNICAL FIELDS
SEARCHED      (IPC)

H02J

The present search report has been drawn up for all claims

| Place of search | Date of completion of the search | Examiner |
|---|---|---|
| Munich | 19 October 2023 | Hartmann, Martin |

EPO FORM 1503 03.82 (P04C01)

## ANNEX TO THE EUROPEAN SEARCH REPORT
## ON EUROPEAN PATENT APPLICATION NO.

EP 23 31 5189

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2023

| Patent document cited in search report | | Publication date | Patent family member(s) | | Publication date |
|---|---|---|---|---|---|
| US 2018026443 | A1 | 25-01-2018 | AU | 2013313724 A1 | 23-07-2015 |
| | | | EP | 2893605 A1 | 15-07-2015 |
| | | | US | 2015214738 A1 | 30-07-2015 |
| | | | US | 2018026443 A1 | 25-01-2018 |
| | | | WO | 2014038966 A1 | 13-03-2014 |
| CN 110336330 | A | 15-10-2019 | NONE | | |
| US 2022340034 | A1 | 27-10-2022 | CN | 114342204 A | 12-04-2022 |
| | | | EP | 4026215 A1 | 13-07-2022 |
| | | | US | 2022340034 A1 | 27-10-2022 |
| | | | WO | 2021043379 A1 | 11-03-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG X. ; PAPCHRISTODOULOU A.** Redesigning Generation Control in Power Systems: Methodology, Stability and Delay Robustness. *Conference on Decision and Control,* 2014

- **DELAVARI A. ; KAMWA I. ; BRUNELLE P.** Simscape Power Systems Benchmarks for Education and Research in Power Grid Dynamics and Control. *IEEE Canadian Conference on Electrical & Computer Engineering,* 2018